# EUROPÄISCHE PATENTANMELDUNG

(11) **EP 4 541 487 A1**
(43) Veröffentlichungstag der Anmeldung: **23.04.2025**
(21) Anmeldenummer: 23204663.1
(22) Anmeldetag: 19.10.2023
(51) Int. Cl.: B22F 1/107, B22F 5/00, B22F 7/02, H02K 15/02, B22F 5/08, B22F 7/04

(54) **VERFAHREN ZUR HERSTELLUNG EINES MAGNETBLECHS, TRÄGERBAND, BLECHPAKET FÜR EINE ELEKTRISCHE MASCHINE UND ELEKTRISCHE MASCHINE**

(71) Anmelder: Siemens Aktiengesellschaft, 80333 München (DE)
(72) Erfinder: Schuh, Carsten, 85598 Baldham (DE)
(74) Vertreter: Siemens Patent Attorneys

(57) **Zusammenfassung**

Die Erfindung betrifft ein 1. Verfahren zur Herstellung eines Magnetblechs 22 für eine elektrische Maschine 4, umfassend folgende Schritte:
- Herstellen einer viskosen Masse (6) in Form eines Schlickers durch Vermischen mindestens eines anorganischen Pulvers (26) mit mindestens einem organischen Bindemittel (28) und einem flüssigen Trägermittel (30),
- Bereitstellen eines Schlicker-Trägerbandes 102, wobei auf einer Oberfläche 110 des Trägerbandes 102 mindestens zwei unterschiedliche Oberflächenbereiche 104, 106 erzeugt werden, einen Haftungsbereich 104 und einen Fließbereich 106, wobei
- der Haftungsbereich 104 im Wesentlichen die Geometrie eines Magnetblech-Grünkörpers 8 abbildet und
- einen Kontaktwinkel 108 mit dem Schlicker 6 aufweist der weniger als 50° beträgt und
- der Fließbereich 106 einen Kontaktwinkel mit dem Schlicker 6 aufweist, der mehr als 100° beträgt,
- Aufbringen des Schlickers 6 auf das Trägerband 102, sodass der Schlicker 6 vom Fließbereich 106 abfließt und am Haftungsbereich haften bleibt,
- Trocknen des Schlickers 6 auf dem Trägerband 102, wodurch der Magnetblech-Grünkörper 6 auf dem Haftungsbereich 104 entsteht,
- Sintern des Magnetblechgrünkörpers.

## Beschreibung

Die Erfindung betrifft ein Verfahren zur Herstellung eines Magnetblechs nach Anspruch 1, ein Trägerband 13, Magnetblechstapel nach Anspruch 14 für eine elektrische Maschine und elektrische Maschine nach Anspruch 15.

In herkömmlichen elektrischen Maschinen weist der Stator oder auch der Rotor ein Blechpaket auf, um das elektrische Leiter gewickelt sind. Dieses Blechpaket besteht aus einer Vielzahl einzelner Magnetbleche, die übereinander gestapelt sind. In den allermeisten Fällen werden diese Blechpakete aus einem sogenannten Coil, das aus dem gewünschten Material, beispielweise einer weichmagnetischen Eisenlegierung besteht, herausgestanzt. Aus motortechnischen Gründen ist es zur Erreichung einer möglichst hohen Leistungsdichte zweckmäßig, die einzelnen Magnetbleche des Magnetblechstapels oder des Blechpaketes möglichst dünn zu gestalten. Die aus einer Folie oder einem Coil ausgestanzten Magnetbleche erreichen mit herkömmlichen technischen Mitteln eine Dicke, die nicht geringer als 200 µm bis 300 µm ist. Aus diesem Grund ist man in letzter Zeit dazu übergegangen, durch ein Schablonendruckverfahren, das auch ein Siebdruckverfahren einschließt, Magnetbleche möglichst endkonturnah in einem Grünzustand zu drucken. Ein Beispiel für diese Technologie zur Herstellung von Magnetblechstapeln mit endkonturnahem Siebdruck ist in der EP 4060882A1 gegeben. Ein weiteres Beispiel für diese Siebdrucktechnologie ist in der EP 3595148B1 dargestellt.

Bei der Herstellung von herkömmlichen Magnetblechen durch Ausstanzen dieser aus einem fortlaufenden Coil entsteht eine sehr große Menge von Abfall, die grundsätzlich im Hochofen als Eisenwerkstoff wiederverwertet werden kann, aber der Herstellungsprozess für ein neues Herstellen von entsprechenden Hochleistungsmaterialien ist extrem teuer. Ferner ist durch diese Technologie kaum oder nur sehr begrenzt die entsprechende Schichtdicke für Motoren mit einer hohen Leistungsdichte zu erreichen. Das Drucken von Magnetblechen mittels Schablonen ist für eine große Serienfertigung nur mit einem sehr hohen Investitionsaufwand für die Fertigungsanlagen zu erzielen.

Die Aufgabe der Erfindung besteht darin, ein Verfahren zur Herstellung eines Magnetbleches für einen Motor mit einer gegenüber dem Stand der Technik höheren Leistungsdichte bereitzustellen, das großtechnisch gegenüber den bekannten Verfahren mit einem geringeren Aufwand an Fertigungsanlagen darstellbar ist.

Die Lösung der Aufgabe besteht in einem Verfahren zur Herstellung eines Magnetblechs nach Anspruch 1, ein Trägerband 13, Magnetblechstapel nach Anspruch 14 für eine elektrische Maschine und elektrische Maschine nach Anspruch 15.

Das Verfahren zur Herstellung eines Magnetblechs für eine elektrische Maschine umfasst dabei folgende Schritte:
- Herstellen einer viskosen Masse (6) in Form eines Schlickers durch Vermischen mindestens eines anorganischen Pulvers (26) mit mindestens einem organischen Bindemittel (28) und einem flüssigen Trägermittel (30),
- Bereitstellen eines Schlicker-Trägerbandes, wobei auf einer Oberfläche des Trägerbandes mindestens zwei unterschiedliche Oberflächenbereiche erzeugt werden, einen Haftungsbereich und einen Fließbereich, wobei
- der Haftungsbereich im Wesentlichen die Geometrie eines Magnetblech-Grünkörpers abbildet und
- einen Kontaktwinkel mit dem Schlicker aufweist der weniger als 50° beträgt und
- der Fließbereich einen Kontaktwinkel mit dem Schlicker aufweist, der mehr als 100° beträgt,
- Aufbringen des Schlickers auf das Trägerband, sodass der Schlicker vom Fließbereich abfließt und im Haftungsbereich haften bleibt,
- Trocknen des Schlickers auf dem Trägerband, wodurch der Magnetblech-Grünkörper auf dem Haftungsbereich entsteht,
- Abnehmen des Magnetblech-Grünkörpers vom Trägerband und
- Sintern des Magnetblechgrünkörpers.

Die im Patentanspruch 1 und in den fortfolgenden Patentansprüchen verwendeten technologischen Begriffe seien dabei wie folgt definiert:
Viskose Masse: Je nach Höhe der Viskosität, also der Zähigkeit der Masse, wird diese im technischen Umfeld eher als Paste (hohe Viskosität) oder als Schlicker (niedrigere Viskosität) bezeichnet. Die Viskosität der Masse ist in der Regel von äußeren Einflüssen abhängig. Dazu gehören zum einen die Temperatur, wobei mit höherer Temperatur die Viskosität sinkt. Zum anderen lässt sich die Viskosität durch das Einbringen von Scherspannungen (beispielsweise mittels eines Rührers oder eines Rakels) verändern. Erniedrigt sich die Viskosität (insbesondere temporär) durch das Einbringen von Scherspannungen, nennt man dieses Verhalten ein thixotropes Verhalten (im umgekehrten Fall sprich man von Rheopexie). Der Paste werden bevorzugt die Thixotropie fördernde Zusatzstoffe, wie zum Beispiel Stellmittel oder Verdicker, zugefügt.

Die Masse enthält in ihrer Grundzusammensetzung ein anorganisches Pulver. Das Pulver ist bevorzugt ein Metallpulver, das Eisen oder eine Eisenlegierung umfasst, wobei die Eisenlegierung bevorzugt weichmagnetische Eigenschaften aufweist. Weichmagnetische Stoffe lassen sich in einem Magnetfeld leicht magnetisieren und auch umpolarisieren. Die viskose Masse umfasst im Weiteren ein flüssiges Trägermittel, wie z. B. Wasser, Alkohole (z.B. Terpineole oder Glycerin), Ether, Ester, Ketone, Amine, Amide, allgemein Kohlenwasserstoffe [z.B. Pentan/Hexan/Heptan, Benzol-Derivate] sowie Kombinationen hiervon. Das Pulver liegt in diesem flüssigen Trägermittel dispergiert vor. Ferner enthält die Masse mindestens ein organisches Bindemittel wie z.B. Zellulosen, Polyvinylalkohole / -acetale (PVA oder PVB), Acrylatdispersionen. Dieses organische Bindemittel (oder gegebenenfalls mehrere Bindemittel) trägt zum einen zur Beeinflussung der rheologischen Eigenschaften der viskosen Masse bei, zum anderen dient es zur Verfestigung eines Grünkörpers, wie man ein Gebilde nach der Formgebung der viskosen Masse und der daran anschließenden Trocknung bezeichnet.

Ein Grünkörper ist in diesem Zusammenhang zunächst der Körper, den die viskose Masse nach ihrer flächigen Formgebung und nach einem zumindest teilweisen Entfernen des flüssigen Trägermittels bildet. Das Entfernen des flüssigen Trägermittels führt zu einer mechanischen Stabilisierung der Masse (die nun nicht mehr viskos ist), so dass sie nun mechanisch handhabbar und bearbeitbar ist. Der Grünkörper enthält in diesem Zustand noch das oder die organischen Bindemittel, die bevorzugt thermisch, gegebenenfalls auch chemisch, entfernt werden müssen. Dies bezeichnet man als Entbindern und man spricht nach dem Entbindern von einem entbinderten Grünkörper.

Der entbinderte Grünkörper wird einem Sinterprozess unterzogen. Durch die Wärmebehandlung in Form eines Sinterprozesses, bei dem anders als bei einem Schmelzvorgang einzelne Körner im Grünkörper durch Diffusionsprozesse eine zusammenhängende, stofflich verbundene Struktur bilden, wird der Grünkörper in einen Sinterkörper überführt. Obwohl bei dem Sinterprozess Diffusionsprozesse überwiegen, können dennoch lokale Schmelzphasen auftreten.

Das Schlicker-Trägerband weist dabei zunächst alle Eigenschaften auf, die für ein übliches Trägerband zum Schlickergießen oder zum Schlickerziehen oder für ein sogenanntes Green Tape-Verfahren üblich ist. Das Trägerband hat dabei ähnliche Eigenschaften wie ein Förderband. Das hier zum Einsatz kommende Trägerband weist zusätzlich zwei unterschiedliche Oberflächenbereiche auf, einen Haftungsbereich und einen Fließbereich. Der Haftungsbereich ist dabei so ausgestaltet, dass der Schlicker einen sehr kleinen Kontaktwinkel, weniger als 50° aufweist und somit auf dem Haftungsbereich haften bzw. kleben bleibt. Der Fließbereich hingegen ist so ausgestaltet, dass dieser vom Schlicker besonders schlecht benetzt wird, also einen hohen Kontaktwinkel von über 100° umfasst, sodass dieser Bereich hydrophob ist und der Schlicker nicht anhaftet und somit abfließt. Der Begriff hydrophob ist zwar üblicherweise nur für Wasser als Lösungsmittel gebräuchlich, hier wird er für alle eingesetzten Lösungsmittel analog verwendet.

Der Kontaktwinkel (auch Benetzungswinkel genannt und häufig in der Literatur mit θ bezeichnet) ist ein Maß für das Vermögen einer Flüssigkeit, die Oberfläche eines festen Körpers zu benetzen. Die Form, die ein Tropfen auf einer Fläche annimmt, hängt von der Oberflächenspannung der Flüssigkeit und der Beschaffenheit der Fläche ab. An der Grenze zwischen Tropfen und gasförmiger Umgebung bewirkt die Oberflächenspannung eine gekrümmte Kontur. Am Rand des Tropfens, wo die Kontur in die Auflagefläche übergeht, bildet sich zwischen der Grenzfläche flüssig / fest und der Tangente an die Grenzfläche flüssig / gasförmig der Kontaktwinkel aus. Der Kontaktwinkel wird mittels eines Kontaktwinkelmessgeräts mit der sogenannten Sessile-Drop-Methode nach ISO 19403-1, -2, -5 gemessen.

Auf diese Weise stellt sich nach dem Aufbringen des Schlickers auf das Schlicker-Trägerband ein Zustand ein, dass lediglich an den Haftungsbereichen der Schlicker anhaftet und in den Fließbereichen kein Schlicker vorliegt, sodass diese frei sind. Gegenüber dem Stand der Technik nach herkömmlichen Schlickergieß- bzw. Schlickerziehverfahren weist das Verfahren nach Anspruch 1 somit den Vorteil auf, dass eine nachträgliche Strukturierung zum eigentlich gewünschten geometrischen Körper, in diesem Fall der Grünkörper eines Magnetbleches, erspart bleibt. Diese Geometrie stellt sich über den Haftungsbereichen des Trägerbandes von selbst ein. Dabei weist der Haftungsbereich im Wesentlichen die Geometrie des späteren Grünkörpers auf. Unter Geometrie wird hierbei die projizierte Fläche des späteren Grünkörpers, der eine rondenförmige, also sehr flache und rotationssymmetrische körperliche Ausbildung hat, verstanden. Der Haftungsbereich ist im Wesentlichen mit derselben projizierten Fläche wie der spätere Grünkörper ausgestaltet, dabei bedeutet "im Wesentlichen", dass aufgrund von möglichen Schrumpfungsvorgängen, die während der Trocknung auftreten oder von bestimmtem Benetzungsverhalten entweder kleine Vergrößerungen oder Verkleinerungen der projizierten Grünkörperfläche im Haftungsbereich mitberücksichtigt werden.

Ein weiterer Vorteil des beschriebenen Verfahrens gegenüber dem erwähnten Stand der Technik besteht darin, dass einerseits gegenüber dem herkömmlichen und allseits verbreiteten Ausstanzen von Blechen aus einem Blech-Coil eine wesentlich geringere Dicke der Magnetbleche realisiert werden kann, was für die Leistungsdichte des Motors von erheblicher Bedeutung ist. Außerdem müssen nicht große Mengen an wertvollem, hoch aufbereitetem Material, das ausgestanzt wird, weggeworfen werden bzw. zu ganz normalem Stahl recycelt werden. Vielmehr kann der bei dem beschriebenen Verfahren durch die Strukturierung entstandene Schlickerrest in technisch ausgesprochen unaufwändiger Weise wieder in die neue viskose Masse integriert werden. Im Gegenzug unterscheidet sich das beschriebene Verfahren von dem alternativen Herstellungsprozess, nämlich dem endkonturnahen Schablonendruckverfahren, insbesondere darin, dass ebenfalls ein endkonturnaher Prozess durchgeführt wird, der jedoch ein kontinuierlicher Prozess ist. Somit kann das Problem des technisch sehr aufwändigen Handlings von frisch gedruckten Grünkörpern vermieden werden. Somit ist gegenüber dem Siebdruck- bzw. Schablonendruckverfahren eine wesentlich bessere großtechnische Produktion mit geringerem Investitionsaufwand an Herstellungsmaschinen möglich. Auch während des Produktionsprozesses ist ein geringerer technischer Aufwand bei geringerem Ausschussrisiko nötig.

In einer vorteilhaften Ausgestaltungsform der Erfindung weist die Oberfläche des Trägerbandes selektiv für den Haftungsbereich eine Schicht auf, die den Kontaktwinkel reduziert. Derartig selektiv auf den Kontaktwinkel wirkende Oberflächen können einerseits chemisch, auf der anderen Seite physikalisch auf die Adhäsion und somit auf den Kontaktwinkel wirken. Die Wirkungsweise der Schicht wird in der Kombination mit dem verwendeten Schlicker bzw. auch insbesondere dessen Inhaltsstoffe und Trägerstoffe, beispielweise Wasser oder Alkohol, mitbestimmt. Insbesondere aber auch eine oberflächenraue Beschichtung kann den Kontaktwinkel beeinflussen.

In diesem Zusammenhang ist es auch zweckmäßig, direkt die Oberfläche des Trägerbandes im Haftbereich selektiv für diesen mit einer Mikro-Vertiefungsstrukturierung zu versehen. Dies können beispielweise Rillen oder eine definiert aufgebrachte Oberflächenrauigkeit sein. Es hat sich herausgestellt, dass Oberflächen-Vertiefungsstrukturierungen wie Rillen, einen für die Oberfläche vorherrschenden Kontaktwinkel mit dem Schlicker verstärken. Dies gilt gleichermaßen für gute und für schlechte Benetzung. Bei einem niedrigen Kontaktwinkel, der also eine gute Benetzung darstellt, verbessert die Vertiefungsstrukturierung die Benetzung und senkt den Kontaktwinkel. Umgekehrt wird bei einem hohen Kontaktwinkel, also einer schlechten Benetzung, durch die Vertiefungsstrukturierung dieser ebenfalls erhöht. Dieses Phänomen kann somit für den Haftungsbereich als auch für den Fließbereich Anwendung finden. Ebenfalls ist es zweckmäßig, den Fließbereich selektiv mit einer bezüglich des Schlickers hydrophoben Schicht also mit einer Schicht, die den Benetzungswinkel erhöht, zu versehen. Dies kann beispielweise eine Silikonschicht oder eine silikonhaltige Schicht sein.

Ferner ist es zweckmäßig, wenn der auf den Fließbereich aufgebrachte Schlicker vom Trägerband abfließt. Dies kann durch seitliches Abfließen vom Trägerband erfolgen, es können jedoch auch in das Trägerband im Fließbereich Abflussöffnungen beispielsweise in Form von Löchern eingebracht sein. Auf diese Weise wird der überschüssige Schlicker im Fließbereich prozessual sehr unaufwändig und zeitnah entfernt, wobei im Haftungsbereich der rondenförmige Grünkörper stehenbleibt. Der so abgeflossene Schlicker kann für den weiteren Verlauf dem Gießprozess ohne weitere Aufbereitung wieder zugeführt werden.

In einer Ausgestaltungsform der Erfindung umfasst das anorganische Pulver Eisen oder eine Eisenlegierung, die wiederum bevorzugt weichmagnetische Eigenschaften aufweist. Durch dies Maßnahme kann mittels kostengünstiger und gut verfügbarer Werkstoffe eine magnetisch vorteilhafte Wirkung für das Blechpaket erzielt werden.

Die über Lasergranulometrie ermittelte Partikelgröße des Pulvers d₉₅ ist dabei bevorzugt geringer als 100 µm, sodass eine Schicht erzielt werden kann, deren Dicke bevorzugt weniger als 300 µm, besonders bevorzugt weniger als 200 µm beträgt. Üblicherweise weisen die Partikel des Pulvers einen d₅₀-Wert auf, der geringer als 50 µm ist. Die geringen Schichtdicken des daraus entstehenden Magnetblechs haben wie beschrieben technische Vorteile bei der Leistungsdichte der elektrischen Maschine, bevorzugt eines Elektromotors. Insbesondere ist dabei die Schichtdicke des flächigen Grünkörpers jedoch mindestens 20 pm, bevorzugt mindestens 50 µm. Somit stellt sich eine besonders bevorzugte Schichtdicke zwischen 50 µm und 200 µm ein.

Verfahrenstechnisch besonders vorteilhaft ist es, wenn das Entbindern des Grünkörpers, also das thermische Entfernen der Bindemittel, und das Sintern des Grünkörpers in einem integrierten thermischen Prozess erfolgt. Hierbei kann beispielweise und in vorteilhafter Weise ein Tunnelofen zur Anwendung kommen, bei dem durch ein Förderband bewegt die Grünkörper zunächst einen Temperaturbereich, der zur Entbinderung geeignet ist, durchlaufen und im weiteren Verlauf des Tunnelofens die Temperatur auf eine Sintertemperatur ansteigt.

Des Weiteren ist es zweckmäßig, dass ein Formveränderungsfaktor zwischen dem Magnetblech-Grünkörper und dem Magnetblech ermittelt wird, und der Strukturierungsprozess so eingestellt wird, dass sich der Magnetblech-Grünkörper um den Formveränderungsfaktor von einem festgelegten Endmaß des Magnetbleches unterscheidet. Das heißt, bezüglich einer technischen Beschreibung braucht das Magnetblech eine fest definierte und festgelegte Kontur. Da es beim Sinterprozess zu einer Konturveränderung des Magnetblechs, in der Regel zu einer Schwindung kommt, wird die zu erwartende Schwindung durch den Formveränderungsfaktor bei der Strukturierung des Magnetblech-Grünkörpers mit einberechnet. Dieser so ermittelte Formveränderungsfaktor wird im Weiteren auf die Kontur, also z. B. dem Durchmesser des Haftungsbereichs angewandt. Auf diese Weise ist eine endkonturnahe Fertigung des Magnetblechs möglich. Im Idealfall muss das fertige Magnetblech bzw. das gestapelte Blechpaket nicht mehr oder nur geringfügig nachbearbeitet werden.

In einer weiteren vorteilhaften Ausgestaltungsform der Erfindung erfolgt das flächige Verteilen der viskosen Massen mittels eines Schlickergussverfahrens, eines Tape-Casting-Verfahrens, eines Sprühverfahrens oder eines Schablonendruckverfahrens.

Ein weiterer Bestandteil der Erfindung ist ein Trägerband nach einem der Ansprüche 1 bis 5 zur Abscheidung eines Schlickers und zur Herstellung eines Magnetblechgrünkörpers und im Weiteren eines Magnetbleches nach einem Verfahren der Ansprüche 1 bis 12. Hierbei handelt es sich um ein, wie insbesondere in den Ansprüchen 1 bis 5 beschrieben, gegenüber dem Stand der Technik besonders ausgestaltetes Trägerband, das das Verfahren nach den Ansprüchen 1 bis 12 ermöglicht.

Ebenfalls ein weiterer Bestandteil der Erfindung ist ein Magnetblechstapel, der auch als Blechpaket bezeichnet wird, der eine Vielzahl von Magnetblechen umfasst, die nach einem Verfahren nach einem der Ansprüche 1 bis 12 hergestellt sind. Dieser erfindungsgemäße Magnetblechstapel ist wiederum Teil einer elektrischen Maschine nach Anspruch 15, die diesen Magnetblechstapel nach Anspruch 14 als Teil eines Rotors oder Stators umfasst.

Weitere Merkmale und weitere vorteilhafte Ausgestaltungsformen der Erfindung werden anhand der folgenden Figuren näher erläutert. Dabei handelt es sich um schematische Ausgestaltungsformen, die lediglich der Veranschaulichung dienen und keine Einschränkung des Schutzbereichs darstellen. Auch Kombinationen der einzelnen Verfahrensschritte sind möglich und zweckmäßig. Merkmale mit derselben Bezeichnung jedoch in unterschiedlicher Ausgestaltungsform werden dabei mit denselben Bezugszeichen versehen.

Dabei zeigen:
- Figur 1: eine Explosionsdarstellung einer elektrischen Maschine in Form eines Elektromotors,
- Figur 2: ein Blechpaket für einen Rotor,
- Figur 3: eine schematische Darstellung zur Herstellung einer viskosen Masse,
- Figur 4: schematische Darstellung von Kontaktwinkeln auf verschiedenen Oberflächen,
- Figur 5: Veranschaulichung des Einflusses von Vertiefungsstrukturierungen auf den Kontaktwinkel,
- Figur 6: Draufsicht auf ein Schlicker-Trägerband,
- Figur 7: Draufsicht auf ein Schlicker-Trägerband mit Schlicker,
- Figur 8: eine Prozessablaufskizze, die den Ablauf zur Herstellung eines Magnetbleches beschreibt,
- Figur 9: eine Prozessablaufskizze analog Figur 4, die sich darin unterscheidet, dass der Sinterprozess mit gestapelten Magnetblechen erfolgt

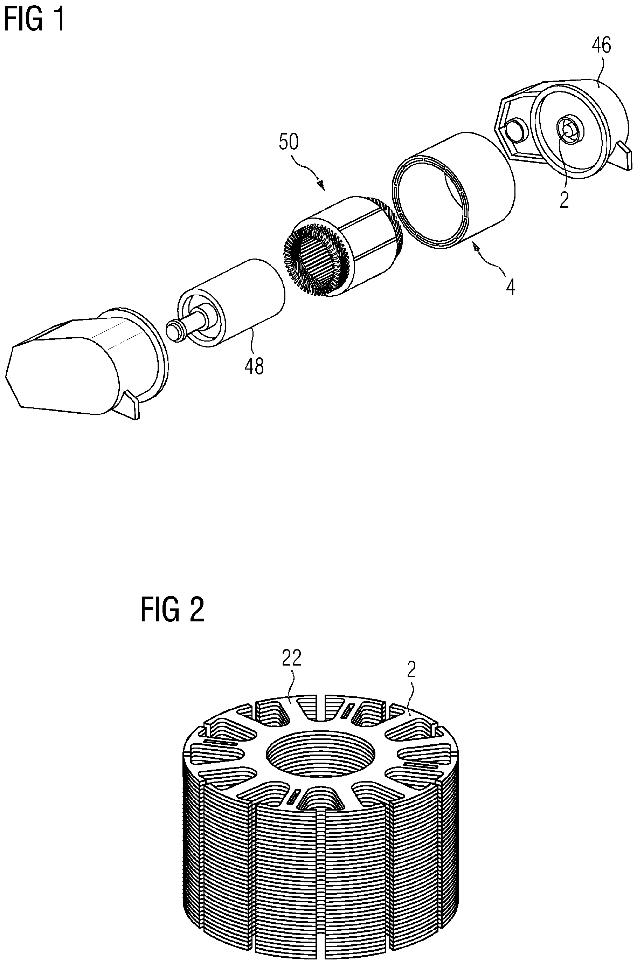

Das beschriebene Verfahren dient zur Herstellung eines Magnetblechstapels 2, der auch als Blechpaket bezeichnet werden kann, für einen Stator 50 oder einen Rotor 48 einer elektrischen Maschine 4. Eine elektrische Maschine 4 dieser Bauart ist schematisch in Figur 1 als Explosionsdarstellung dargestellt. Neben dem Stator 50 und dem Rotor 48 wird hierbei noch ein Gehäuse 46 dargestellt. Bei der elektrischen Maschine 4 handelt es sich um einen Elektromotor, beispielsweise für die Verwendung in einem Elektrofahrzeug. Grundsätzlich kann die elektrische Maschine 4 jedoch auch als Generator ausgestaltet sein.

Figur 2 zeigt eine vergrößerte Darstellung eines Magnetblechstapels 2, der in diesem Fall für den Rotor 48 ausgestaltet ist. In diesem Blechpaket werden anschließend elektrische Wicklungen eingeführt, um die entsprechenden elektrischen Eigenschaften des Rotors 48 zu bewirken. Aus magnetischen Gründen werden derartige Blechpakete 2 eben nicht aus einem monolithischen Material hergestellt, sondern aus einzelnen Magnetblechen 22, die eben zu diesem Blechpaket 2 zusammengestapelt sind. Üblicherweise ist zwischen den einzelnen Magnetblechen 22 eine hier nicht dargestellte Isolierschicht angebracht.

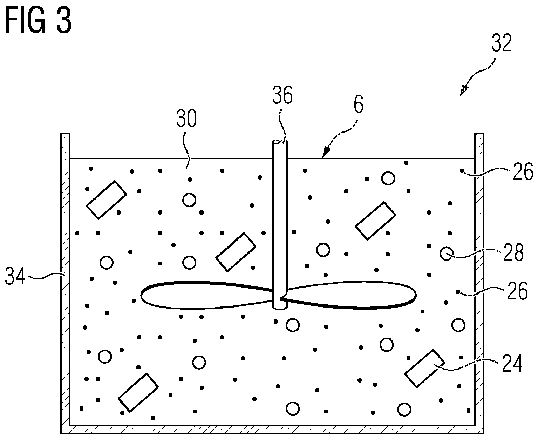

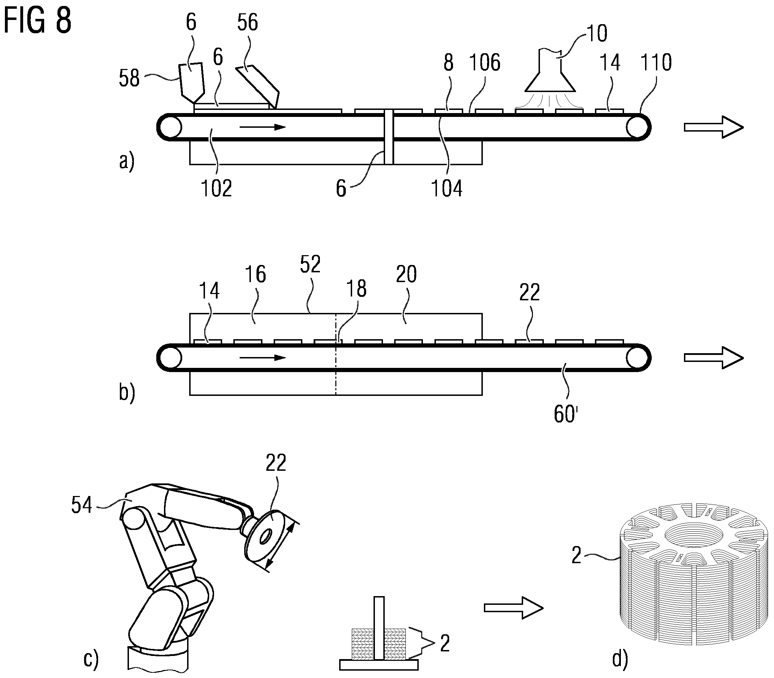

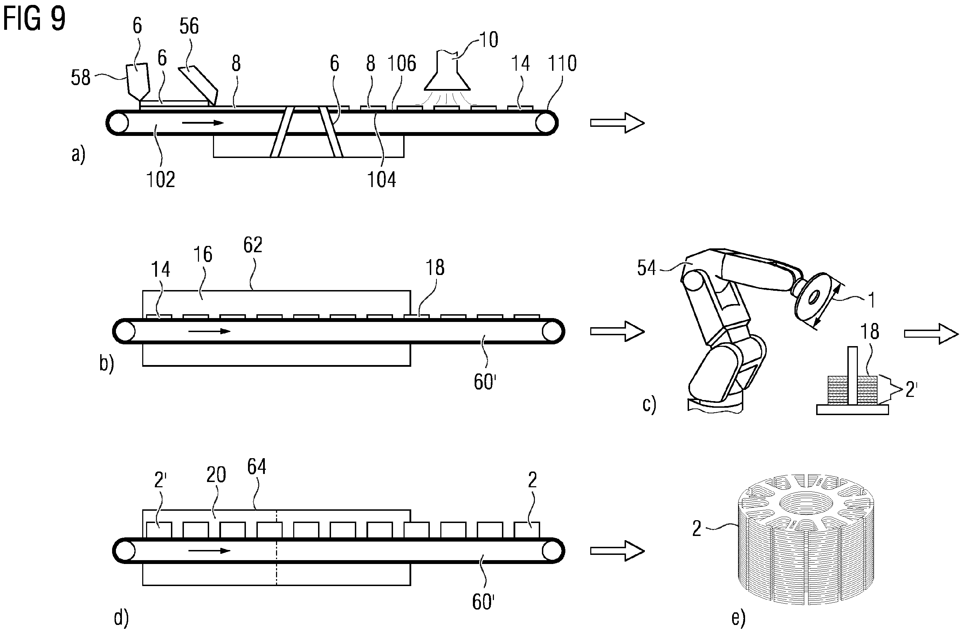

In den Figuren 8 und 9 wird erläutert, wie ein entsprechendes Magnetblech gemäß Figur 2 mit dem vorteilhaften Verfahren herstellbar ist. Zunächst wird gemäß Figur 3 eine viskose Masse in Form eines Schlickers 6 hergestellt, der als zentraler, funktionaler Bestandteil ein anorganisches, in der Regel ein metallisches Pulver, hier in Form von 96 %igem Eisen mit weichmagnetischen Eigenschaften, aufweist. Dieses anorganische Pulver 26 wird in einem flüssigen Trägermaterial 30 dispergiert. Dieses flüssige Trägermaterial 30 ist für eine großtechnische Herstellung in kostengünstiger Weise bevorzugt auf Wasserbasis ausgestaltet. Dem flüssigen Trägermaterial 30 können jedoch auch noch weitere funktionale flüssige Bestandteile zugesetzt sein. Diese können ganz oder teilweise Alkohole, Ether, Ester, Ketone, Amine, Amide, Säuren, Laugen oder ganz allgemein Kohlenwasserstoffe wie beispielweise Pentan, Hexan, Heptan oder Benzol-Derivate sein. Die genannten Stoffe können einzeln oder auch als Beimengung oder Mischungen vorliegen und somit das flüssige Trägermittel 30 bilden. Dabei ist auch ein hoher Wasseranteil von 90 % und mehr vorteilhaft, da dies großtechnisch günstig darstellbar ist. Das Eisenpulver hat dabei in dieser Ausgestaltungsform einen d₅₀-Wert von 50 µm. Das bedeutet, dass 50 % der einzelnen Partikel einen kleineren Durchmesser als 50 µm haben. Der maximale Durchmesser sollte nicht mehr als 100 µm sein.

Ferner ist es nötig, dem Schlicker 6 noch ein Bindemittel, insbesondere ein organisches Bindemittel 28 zuzuführen. Hierbei gibt es eine Auswahl aus einer Vielzahl organischer Bindemittel 28, z.B. Zellulosen, Polyvinylalkohole, Polyvinylacetate (PVA) oder Polyvinylbutyrale (PVB) sowie Acrylatdispersionen. Dieses organische Bindemittel 28 dient zur Verfestigung der anorganischen Partikel in einem Grünzustand nach einem Trocknen und somit nach dem zumindest teilweise Beseitigen des flüssigen Trägermittels 30.

Ein Beispiel für die Zusammensetzung eines Schlickers 6 ist wie folgt gegeben:

| **wässrige Siebdruckpaste** | **Beispiel** | **Gewicht / g** | **Gewichts-%** | **Volumen / cm³** | **Volumen %** |
|---|---|---|---|---|---|
| **Pulver** | Reineisen | 4125 | 82,5% | 532,25 | 40, 9% |
| **Sinteradditiv** | Fe3P | 121,6 | 2,4% | 18,04 | 1,4% |
| **Träger** | H2O | 480 | 9, 6% | 480 | 36, 8% |
| **Dispergator** | Disperbyk 190 | 61,8 | 1,2% | 63,06 | 4, 8% |
| **Binder** | Tylose | 40,5 | 0, 8% | 36, 81 | 2,8% |
| **Weichmacher** | Glycerin | 50 | 1, 0% | 51,02 | 3,9% |
| **Entschäumer** | Agitan 299 | 24 | 0,5% | 24,48 | 1,9% |
| **Stellmittel** | Lubranil RN2 0 | 85 | 1,7% | 86, 73 | 6,7% |
| **Antioxidationsmittel** | | 10 | 0,2% | 10,20 | 0, 8% |
| **Thixotropiemittel** | | 0 | 0, 0% | 0 | 0, 0% |

Eine alternative Zusammensetzung einer viskosen Masse 6 ist wie folgt angegeben:

| **organische Paste** | **Beispiel** | **Gewicht / g** | **Gewichts-%** | **Volumen / cm³** | **Volumen %** |
|---|---|---|---|---|---|
| **Pulver** | Reineisen | 8500 | 85, 0% | 1096,77 | 45,7% |
| **Sinteradditiv** | FePO4 | 286,8 | 2,9% | 99, 93 | 4,2% |
| **Träger** | Terpiniol | 920 | 9,2% | 920 | 38,3% |
| **Dispergator** | KD11 | 80,8 | 0, 8% | 82,44 | 3,4% |
| **Binder** | PVB | 132 | 1,3% | 120 | 5, 0% |
| **Weichmacher** | DOA | 70 | 0,7% | 71,42 | 3, 0% |
| **Entschäumer** | | 0 | 0, 0% | 0 | 0, 0% |
| **Stellmittel** | | 0 | 0, 0% | 0 | 0, 0% |
| **Antioxidationsmittel** | Thixatrol | 10 | 0,1% | 10,20 | 0,4% |

Durch die Variation des Anteils des Trägermittels, in diesem bevorzugten Fall des Wassers und durch die Variation der Zusatzstoffe, wie beispielsweise des Stellmittels oder des Thixotropiemittels kann die Viskosität des Schlickers 6 entsprechend der Anforderungen der Auftragungsmethode angepasst werden.

Das anorganische Pulver 26 in Form des Eisenpulvers enthält Verunreinigungen von Sauerstoff, Kohlenstoff, Stickstoff und Schwefel, wobei die stärkste Verunreinigung Sauerstoff ist, die allerdings höchstens 0,22 Gew. % beträgt Die übrigen Verunreinigungen weisen weniger als 0,02 Gew. % auf. Die Kornverteilung der Eisenpartikel ist wie folgt angegeben:

| | |
|---|---|
| D10 | 3.71 µm |
| D50 | 5.74 µm |
| D90 | 10.05 µm |

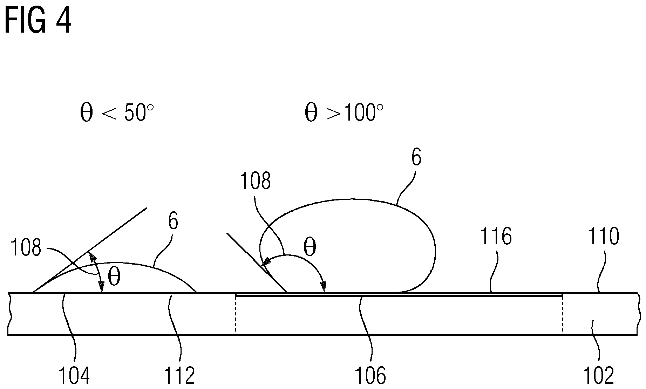

Das Schlickergieß- oder Schlickerziehverfahren, das in der folgenden Beschreibung näher erläutert wird, umfasst ein Schlicker-Trägerband 102, das gegenüber dem Stand der Technik wesentliche Unterschiede aufweist. Das Trägerband 102 weist dabei mindestens zwei unterschiedliche Bereiche auf, einen Haftungsbereich 104 und einen Fließbereich 106. Diese Bereiche 104 und 106 liegen in einer Oberfläche 110 des Trägerbandes 102. Hierfür ist die Oberfläche 110 in den Bereichen 104 und 106 entsprechend modifiziert, sodass im Haftungsbereich 104 gegenüber dem Schlicker 6 ein Kontaktwinkel 108 vorliegt, der weniger als 50° aufweist. Ein Kontaktwinkel mit weniger als 50°, insbesondere weniger als 20°, zeugt von einer sehr guten Benetzung der Oberfläche 110 im Haftungsbereich 104. Die Darstellung der Kontaktwinkel 108 bei verschiedenen Oberflächenbeschaffenheiten zwischen der Oberfläche 110 bzw. in den Bereichen 104 (Haftungsbereich) und 106 (Fließbereich) ist in Figur 4 schematisch in einer Querschnittsdarstellung dargestellt. Der Kontaktwinkel ist hierbei auch mit dem griechischen Buchstaben θ versehen, wie dies in der Literatur üblich ist.

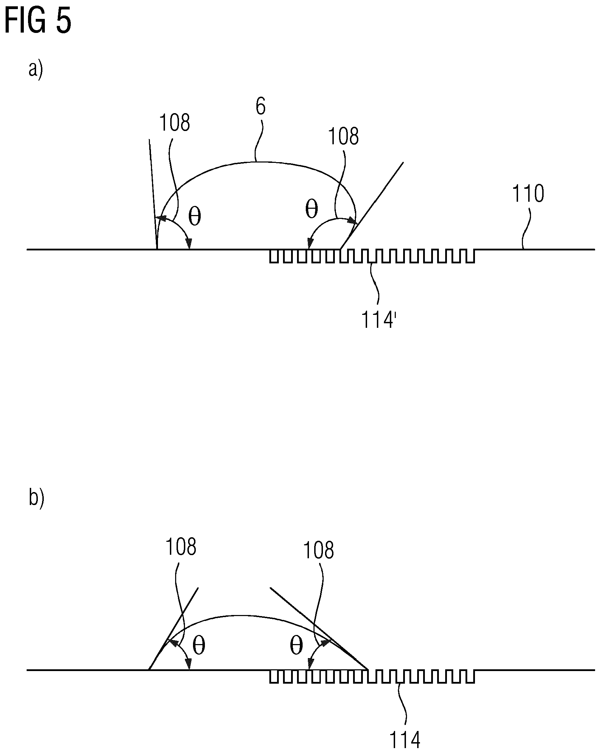

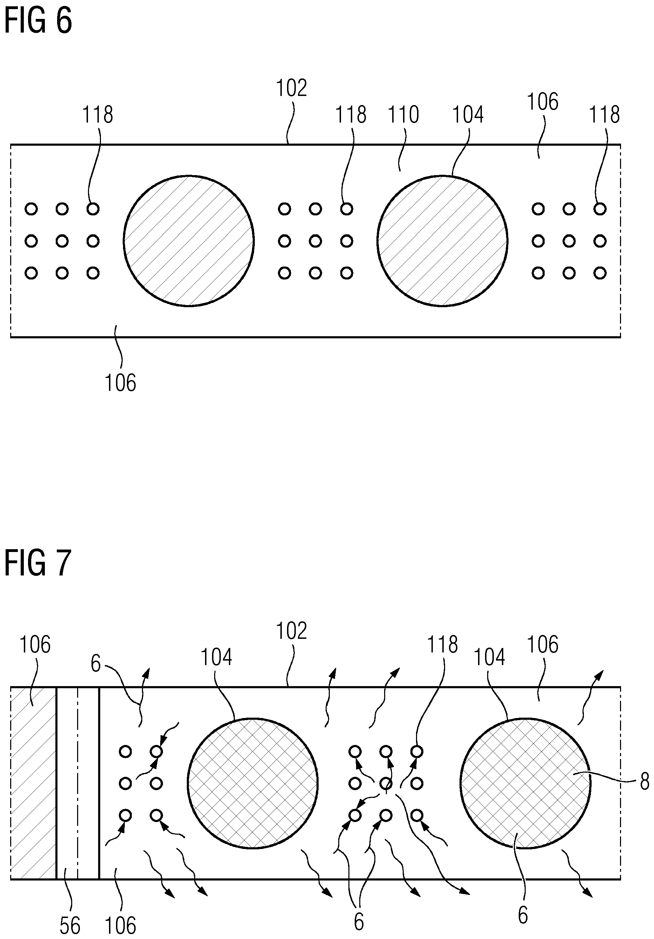

In dem Fließbereich 106 ist der Kontaktwinkel 108 deutlich größer als im Haftungsbereich 104. Der Kontaktwinkel 108 beträgt hier mindestens 100°, wobei auch hier gilt, umso größer der Kontaktwinkel 108 im Fließbereich 106 ist, umso besser ist dies für ein Abfließen des Schlickers 6 nach Auftragung. Dieses Verhalten wird umgangssprachlich auch als Lotuseffekt bezeichnet. Auf dieses Verhalten wird in den Figuren 6 und 7 näher eingegangen. Da es sich in den Bereichen 104, 106 um jeweils denselben Schlicker handelt (der in den Figuren 4 und 5 lediglich als Tropfen für die Darstellung des Kontaktwinkels 108 dargestellt ist) muss die Oberfläche 110 in den Bereichen 104, 106 unterschiedliche Beschaffenheit haben. Hierfür kann beispielsweise im Haftbereich 104 eine kontaktwinkelreduzierende Schicht 112 aufgetragen sein. Im Gegensatz dazu kann im Fließbereich 106 eine kontaktwinkelerhöhende Schicht 116, beispielsweise eine Silikonschicht, aufgetragen sein. Die Schichten 112 und 116 können beispielsweise durch Sprühverfahren oder in Form von dünnen Folien auf die Oberfläche 110 aufgebracht werden.

Grundsätzlich ist der Kontaktwinkel 108 als der Winkel definiert, den eine flüssige Phase, in diesem Fall der Schlicker 6, an der Grenzfläche zwischen einer festen Phase, in diesem Fall der Oberfläche 110 des Trägerbandes 102 und einer Gasphase, die hier nicht dargestellt ist und die die Umgebungsluft ist, definiert. Der Kontaktwinkel 108 ergibt sich aus den Oberflächenspannungen, insbesondere der Oberflächenspannung, die zwischen dem Schlicker 6 und der Oberfläche 110 bzw. der entsprechenden funktionalen Schichten 116 und 112 auftritt. Diese Oberflächenspannung kann sowohl physikalisch als auch chemisch zwischen den beiden Phasen beeinflusst werden.

Es hat sich ferner herausgestellt (Figuren 5 a und 5b), dass feine Vertiefungsstrukturierungen, die ebenfalls eine Oberflächenbeschaffenheit darstellen, den Kontaktwinkel 108 bei demselben Oberflächenmaterial und derselben Flüssigkeit, also demselben Schlicker 6, verstärken. So wird ein großer Kontaktwinkel 108 durch die Vertiefungsstrukturierungen 114' noch größer, wie dies in Figur 5a schematisch dargestellt ist. Umgekehrt wird ein geringer Kontaktwinkel 108 durch die Vertiefungsstrukturierungen 114 noch geringer. Dies ist Figur 5b schematisch dargestellt. Das heißt, dass auch eine Kombination zwischen einer kontaktwinkelverändernden Schicht 112, 116 und Vertiefungsstrukturierungen 114 eine zweckmäßige Ausgestaltung ist, um die Funktionalität des Haftungsbereiches 104 und des Fließbereiches 106 auf dem Trägerband 102 einzustellen.

Diese Vertiefungsstrukturierungen 114, 114` können beispielsweise eine Vielzahl von konzentrischen Ringen sein, insbesondere zur Darstellung des Haftungsbereiches 104. Die Vertiefungsstrukturierungen 114, 114` können jedoch auch als Querrillen, beispielsweise im Fließbereich 106 ausgestaltet sein. Auch eine anisotrope Oberflächenrauigkeit mit einer bestimmten Rauigkeitstiefe kann für die Beeinflussung des Kontaktwinkels 108 in den Bereichen 104 und 106 zweckmäßig sein.

In Figur 6 ist eine Draufsicht auf das Trägerband 102 mit seiner Oberfläche 110 gegeben. Hier sind die rotationssymmetrisch ausgestalteten Haftungsbereiche 104 sowie die übrigen Bereiche, nämlich die Fließbereiche 106, zu erkennen. Zum besseren Abfließen des Schlickers können in dem Fließbereich 106 Löcher 118 vorgesehen sein, durch die der Schlicker 6, wie dies in Figur 7 dargestellt ist, abfließen kann. Der Schlicker 6 kann einerseits durch die Löcher 118 abfließen, es ist jedoch auch ein seitliches Abfließen über einen Rand des Trägerbandes 102 möglich. In Figur 7 wird das gleiche Band 102 wie in Figur 6 dargestellt. Jedoch ist hier gezeigt, wie Schlicker 6 auf das Band 102 gegossen wird und mit einem Rakel 56 verteilt wird. Anhand der geschwungenen Pfeile ist zu erkennen, wie im Fließbereich 106 der Schlicker 6 aufgrund der schlechten Benetzung und des hohen Kontaktwinkels 108 zwischen der Oberfläche 110 im Bereich 106 und dem Schlicker 6 von dem Band 102 abfließt. Lediglich in dem Haftungsbereich 104, in dem zwischen dem Schlicker 6 und der Oberfläche des Trägerbandes eine sehr gute Benetzung, insbesondere eine Benetzung mit einem Kontaktwinkel unter 20°, mindestens aber unter 50° besteht, bleibt der Schlicker 6 haften. In diesem Fall kann von einem flächigen Grünkörper 8 gesprochen werden, von einem Magnetblechgrünkörper 14 wird dann gesprochen, wenn der flächige Grünkörper 8 einem Trocknungsprozess unterzogen wurde, was in den Figuren 8 und 9 dargestellt ist.

In den Figuren 8 und 9 wird ein typischer Prozess für die Herstellung des Magnetblechstapels 2 (Blechpaketes) nach der Bereitstellung des Schlickers 6 beschrieben, wobei sich die Figuren 8 und 9 insbesondere in ihrer Reihenfolge von verschiedenen Prozessschritten sowie in der Aufbringung der viskosen Masse und der Erzeugung eines flächigen Grünkörpers 8 unterscheiden.

In Figur 8a wird dargestellt, wie der Schlicker 6 über eine Dosiervorrichtung 58 auf das Trägerband 102 aufgebracht wird und mittels des Rakels 56 daraus eine gleichmäßig dicke Schicht in Form des flächigen Grünkörpers 8 erzeugt wird. Diese an sich noch recht viskose Schicht wird hier bereits als flächiger Grünkörper 8 bezeichnet. Dieser wird im weiteren Verlauf der kontinuierlichen Förderbewegung mittels eines hier schematisch dargestellten Trocknungsprozesses 10 zumindest oberflächlich angetrocknet, sodass eine bestimmte Festigkeit und Selbsttragefähigkeit des nun getrockneten flächigen Grünkörpers 8 entsteht.

Bei der Ausgestaltung des Haftungsbereiches 104 des flächigen Grünkörpers 8 wird ein Formveränderungsfaktor mitberücksichtigt, bei dem berücksichtigt wird, dass durch einen folgenden Sinterprozess der flächige Grünkörper 8 und der daraus entstehende Magnetblech-Grünkörper 14 einer Schrumpfung unterzogen wird. Somit ist die Kontur des Haftungsbereichs 104 so ausgestaltet, dass der Magnetblech-Grünkörper nach dem Sintern zum Magnetblech einem technisch festgelegten Endmaß des Magnetblechs 22 entspricht, sodass keine oder nur minimale Endbearbeitungen vorgenommen werden müssen.

In Figur 8b ist ein kombinierter Entbinderungsprozess im Sinterofen 52 abgebildet, der von einem Förderband 60 mit dem darauf befindlichen Magnetblechkörper 14 durchlaufen wird. In einer vorteilhaften Ausgestaltungsform gehen die Bänder, nämlich das Trägerband 102 und das Förderbänder 60 direkt oder indirekt (beispielsweise durch Rondelle oder seitliche translatorische Bewegungen) ineinander über, sodass keine Umschichtungsmaßnahmen des Magnetblech-Grünkörpers 14 erforderlich sind, was eine kontinuierliche Prozessführung und die Handhabung der Grünkörper 14 verbessert.

Der entbinderte Grünkörper 14 durchläuft somit den kombinierten Ofen 52, wobei in einem ersten Prozessschritt bei einer Temperatur von ca. 400°C ein Entbinderungsprozess 16 stattfindet. Bei diesen Temperaturbereichen wird das im Schlicker 6 und somit auch im Grünkörper 14 enthaltene organische Bindemittel 28 thermisch zersetzt und es entweicht üblicherweise gasförmig aus den Poren des Grünkörpers 14.

Grundsätzlich besteht eine alternative Entbinderungsmöglichkeit in Form eines chemischen Zersetzens, was in diesem Prozessablaufschema nicht dargestellt ist.

In einem weiteren Teilprozess wird in dem kombinierten Ofen 52 entlang der Laufrichtung des Förderbandes 60 die Prozesstemperatur sukzessive erhöht, sodass für einen Sinterprozess 20 übliche Temperaturen von ca. 1200°C erreicht werden. Die Beförderung der zu sinternden Grünkörper 14 erfolgt in einer Geschwindigkeit, dass sie der Sintertemperatur zwischen 1 bis 5 Stunden ausgesetzt sind und anschließend mit einem Gradienten von 300 K pro Stunde abgekühlt werden. Bei diesen Temperaturen schmelzen die Eisenpartikel des anorganischen Pulvers 26 noch nicht oder nur in sehr lokal begrenzten Bereichen auf. Allerdings finden bei diesen hohen Temperaturen knapp unterhalb des Schmelzpunktes der zu sinternden anorganischen Partikel 26 starke Diffusionsprozesse statt, die zu einer monolithischen Verfestigung der einzelnen Körner führen (Sintern). Da es sich eben nicht um einen Schmelzprozess handelt, bleibt die vorher eingebrachte Kontur weitgehend bestehen, es kommt jedoch in den allermeisten Fällen bei der Sinterung zu einer Schrumpfung, da Poren zwischen den einzelnen Partikeln des anorganischen Pulvers 26 durch die Diffusionsprozesse verschwinden. Für diesen Schwindungsprozess, der bei einer ringförmigen Kontur, wie dies bei den Magnetblechen 22 der Fall ist, zu einer Radiusverringerung sowohl innen als auch außerhalb des Ringes führt, wird der bereits beschriebene Formveränderungsfaktor bei der Strukturierung des Haftungsbereiches 104 berücksichtigt. Nach dem Sinterprozess 20 verlassen die ehemals als Magnetblech-Grünkörper 14 bezeichneten Scheiben den kombinierten Ofen 52 als Magnetbleche 22. Diese Magnetbleche 22 weisen dabei eine sehr nahe Endkontur auf, sodass auf eine weitere mechanische Bearbeitung entweder verzichtet werden kann oder diese in nur sehr geringem Umfang nötig ist.

Im Weiteren werden gemäß Figur 8c automatisiert, beispielsweise durch einen Stapelroboter 54, wie er hier schematisch dargestellt ist, die einzelnen Magnetbleche 22 zu dem Magnetblechpaket 2 gestapelt. Hierauf folgt das Endprodukt dieses Prozesses, das in Figur 8d in Form des fertigen Magnetblechstapels 2 dargestellt ist, der weiter als Rotor 48 einer elektrischen Maschine 4 einem Wickelprozess zugeführt wird.

Ferner ist es während des Stapelns der Magnetbleche 22 zweckmäßig, dass zwischen die Magnetbleche 22 eine elektrisch isolierende Schicht eingebracht wird (was in den Figuren nicht explizit dargestellt ist). Dabei kann es sich beispielsweise um eine elektrisch isolierende Folie handeln. Es kann aber auch eine Schicht während des Stapelns aufgesprüht werden.

Ferner ist es zweckmäßig, nach dem Stapeln der Magnetbleche 22 eine Verdichtung vorzunehmen was hier ebenfalls nicht explizit dargestellt ist. Hierfür wäre insbesondere ein uniaxiales Pressen bei einem Druck in einem Bereich zwischen 0.5 MPa und 50 MPa zweckmäßig. Hierbei stellt sich eine plastische Verformung der einzelnen Magnetbleche 22 im Magnetblechstapel 2 ein, wodurch die Packungsdichte des magnetisch wirksamen Materials noch einmal erhöht wird. Das uniaxiale Pressen stellt dabei eine technisch einfache Lösung dar, eine möglicherweise schonendere Verdichtung kann durch ein isostatische oder auch heißisostatisches Pressen, beispielsweise während oder nach dem Sinterprozess erfolgen.

In Figur 9 ist ein ähnlicher Prozess wie in Figur 8 dargestellt, der als Endprodukt in Figur 9e wieder den gleichen Magnetblechstapel 2 aufweist. Die Figur 9a ist dabei identisch mit der Figur 8a. Im weiteren Prozessverlauf wird zunächst der Magnetblech-Grünkörper 14 in einem Entbinderungsprozess 16 wiederum in einem Entbinderungsofen 62 entbindert, wonach aus dem Entbinderungsofen 62 der entbinderte Grünkörper 18 auf dem Förderband 60 herausläuft. Vom Prinzip ähneln sich die Figuren 8b und 9b, wobei in der Figur 9b kein Sinterungsprozess vorgesehen ist.

In Figur 9c wird nun der entbinderte Grünkörper 18 mit einem vergleichbaren Stapelroboter 54 zu einem Blechpaket aus entbinderten Grünkörpern 18 aufgeschichtet. Auch hier kann gegebenenfalls wie oben beschrieben eine isolierende Schicht, beispielsweise eine Keramikschicht eingebracht werden, die den Sintertemperaturen standhält. Hierfür kann beispielsweise eine Aluminiumoxidschicht nasstechnisch aufgebracht werden. Dieser Magnetblechstapel ist in diesem Fall mit dem Bezugszeichen 2' bezeichnet. In Figur 9d ist dargestellt, wie Magnetblechstapel 2' in einem (entbinderten) Grünzustand in einen Sinterofen 64 geführt werden und dort im bereits gestapelten Zustand in dem Sinterprozess 20 zu dem Magnetblechpaket 2 gesintert werden. Auch dieser Prozess ist kontinuierlich ausgestaltet und findet mittels eines Durchlaufofens unter Inertgasbedingungen auf einem Förderband statt. Der Vorteil dieses Prozesses besteht darin, dass auf einem bereits vorgestapelten Blechpaket 2` ein möglicher Verzug in der Ebene des Magnetbleches 22 weniger stark ausgeprägt ist, sodass die Packungsdichte an magnetisch wirksamen Material im Magnetblechstapel 2 gemäß Figur 9 höher sein kann, als wenn einzelne Magnetbleche analog Figur 8 hergestellt werden. Der Vorteil des Prozesses gemäß Figur 8 gegenüber dem in Figur 9 besteht im Gegenzug darin, dass das Stapeln von fertig gesinterten Magnetblechen 22 vom Handling her weniger aufwändig ist und mittels des Stapelroboters 54 in der Regel mit weniger Ausschuss bewerkstelligt werden kann.

Zu Figur 9c ist noch anzumerken, dass gegebenenfalls der Strukturierungsprozess des flächigen Grünkörpers 8 so ausgestaltet ist, dass Hilfsstrukturen zum Handhaben des Magnetblech-Grünkörpers 14 stehen bleiben. Diese Hilfsstrukturen können insbesondere beim Stapeln oder sonstigen Verfahrensschritten, in denen der Grünkörper 14 umgesetzt wird, hilfreich sein. Diese Hilfsstrukturen, die hier nicht dargestellt sind, werden im späteren Verfahrensverlauf wieder entfernt.

Beide beschriebenen Verfahrensalternativen gemäß den Figuren 8 und 9, die wiederum lediglich exemplarisch gegenüber noch weiteren möglichen Verfahrensabläufen und auch Kombinationen aus den Figuren 8 und 9 beschrieben sind, ist zu eigen, dass es sich um kontinuierliche Prozesse handelt, die eine hohe Durchsatzrate von Magnetblechen 22, aber auch von den Endprodukten, d.h. den Magnetblechstapeln 2, erlauben. Gegenüber dem beschriebenen Siebdruckverfahren nach dem Stand der Technik kann hierbei mit einem geringeren technischen Aufwand eine höhere Stückzahl in der Endfertigung pro Zeiteinheit erzielt werden. Gegenüber den herkömmlichen Herstellungsverfahren für Magnetbleche ist es durch das beschriebene Verfahren vorteilhaft, dass der entstandene Abfall, der durch den Strukturierungsprozess 12 entsteht, mit minimalem Aufwand wieder der Prozesskette zugeführt werden kann, ohne dass dabei eine Verschlechterung des Ausgangsproduktes auftritt.

### Bezugszeichenliste

- 2: Magnetblechstapel
- 4: elektrische Maschine
- 6: Schlicker (viskose Masse)
- 8: flächiger Grünkörper
- 10: Trocknungsprozess
- 12: Strukturierungsprozess
- 14: Magnetblech-Grünkörper
- 16: Entbinderungsprozess
- 18: entbinderter Grünkörper
- 20: Sinterprozess
- 22: Magnetblech
- 26: anorganisches Pulver
- 28: Bindemittel
- 30: flüssiges Trägermittel
- 32: Mischprozess
- 34: Behälter
- 36: Rührer
- 38: integrierter thermischer Prozess
- 40: Tape-Casting-Verfahren
- 46: Gehäuse
- 48: Rotor
- 50: Stator
- 52: kombinierter Entbinderungs- und Sinterofen
- 54: Stapelroboter
- 56: Rakel
- 58: Dosiervorrichtung
- 60: Förderband
- 62: Entbinderungsofen
- 64: Sinterofen
- 102: Trägerband
- 104: Haftungsbereich
- 106: Fließbereich
- 108: Kontaktwinkel
- 110: Oberfläche Trägerband
- 112: Kontaktwinkel reduzierende Schicht
- 114: Vertiefungsstrukturierung
- 116: Kontaktwinkel erhöhende Schicht
- 118: Löcher

## Patentansprüche

1. Verfahren zur Herstellung eines Magnetblechs (22) für eine elektrische Maschine (4), umfassend folgende Schritte:
- Herstellen einer viskosen Masse (6) in Form eines Schlickers durch Vermischen mindestens eines anorganischen Pulvers (26) mit mindestens einem organischen Bindemittel (28) und einem flüssigen Trägermittel (30),
- Bereitstellen eines Schlicker-Trägerbandes (102), wobei auf einer Oberfläche (110) des Trägerbandes (102) mindestens zwei unterschiedliche Oberflächenbereiche (104, 106) erzeugt werden, einen Haftungsbereich (104) und einen Fließbereich (106), wobei
- der Haftungsbereich (104) im Wesentlichen die Geometrie eines Magnetblech-Grünkörpers (8) abbildet und
- einen Kontaktwinkel (108) mit dem Schlicker (6) aufweist der weniger als 50° beträgt und
- der Fließbereich (106) einen Kontaktwinkel mit dem Schlicker (6) aufweist, der mehr als 100° beträgt,
- Aufbringen des Schlickers (6) auf das Trägerband (102), sodass der Schlicker (6) vom Fließbereich (106) abfließt und am Haftungsbereich haften bleibt,
- Trocknen des Schlickers (6) auf dem Trägerband (102), wodurch der Magnetblech-Grünkörper (6) auf dem Haftungsbereich (104) entsteht,
- Sintern des Magnetblechgrünkörpers.

2. Verfahren nach Anspruch 1, **dadurch gekennzeichnet, dass** die Oberfläche (110) des Trägerbandes (102) selektiv für den Haftungsbereich (104) mit einer Kontaktwinkel reduzierenden Schicht (112) beschichtet ist.

3. Verfahren nach Anspruch 1 oder 2, **dadurch gekennzeichnet, dass** die Oberfläche (110) des Trägerbandes (102) selektiv für den Haftungsbereich (104) mit einer Mikro-Vertiefungsstrukturierung (114) versehen ist.

4. Verfahren nach einem der Ansprüche 1 bis 3, **dadurch gekennzeichnet, dass** die Oberfläche (110) des Trägerbandes (102) selektiv für den Fließbereich (106) mit einer Kontaktwinkel erhöhenden Schicht (116) beschichtet ist.

5. Verfahren nach Anspruch 1 oder 2, **dadurch gekennzeichnet, dass** die Oberfläche (110) des Trägerbandes (102) selektiv für den Fließbereich (106) mit einer Mikro-Vertiefungsstrukturierung (114`) versehen ist.

6. Verfahren nach einem der vorhergehenden Ansprüche, **dadurch gekennzeichnet, dass** der auf den Fließbereich (106) aufgebrachte Schlicker (6) durch Löcher (118) im Trägerband (102) von diesem abfließt.

7. Verfahren nach einem der vorhergehenden Ansprüche, **dadurch gekennzeichnet, dass** das anorganische Pulver (26) Eisen oder eine Eisenlegierung umfasst.

8. Verfahren nach Anspruch 7, **dadurch gekennzeichnet, dass** das Eisen oder die Eisenlegierung weichmagnetische Eigenschaften aufweist.

9. Verfahren nach einem der vorhergehenden Ansprüche, **dadurch gekennzeichnet, dass** die maximale Partikelgröße des Pulvers (26) d100 geringer als 100 µm ist.

10. Verfahren nach einem der vorhergehenden Ansprüche, **dadurch gekennzeichnet, dass** die Dicke des flächigen Grünkörpers (8) weniger als 300µm, bevorzugt weniger als 200 µm beträgt.

11. Verfahren nach einem der vorhergehenden Ansprüche, **dadurch gekennzeichnet, dass** die Dicke des flächigen Grünkörpers (8) mindestens 20 µm, bevorzugt mindestens 50 µm beträgt.

12. Verfahren nach einem der vorhergehenden Ansprüche, **dadurch gekennzeichnet, dass** ein Formveränderungsfaktor zwischen dem Magnetblech-Grünkörper (14) und dem Magnetblech (22) ermittelt wird, und der Haftungsbereich (104) so eingestellt wird, dass sich der Magnetblech-Grünkörper (14) um den Formveränderungsfaktor von einem festgelegten Endmaß des Magnetblechs (22) unterscheidet.

13. Trägerband zur Abscheidung eines Schlickers (6) und zur Herstellung eines Magnetblech-Grünkörpers (14) und im Weiteren eines Magnetblechs (22) zur Durchführung eines Verfahrens nach den Ansprüchen 1 bis 12.

14. Magnetblechstapel umfassend einer Vielzahl von Magnetblechen (22) hergestellt nach einem Verfahren nach einem der Ansprüche 1 bis 12.

15. Elektrische Maschine, umfassend einen Magnetblechstapel (2) nach Anspruch 14 als Teil eines Rotors (48) oder Stators (50).
